(19) 

Europäisches
Patentamt
European
Patent Office
Office européen
des brevets

(11) **EP 4 021 097 A1**

(12) **EUROPEAN PATENT APPLICATION**
published in accordance with Art. 153(4) EPC

(43) Date of publication:
**29.06.2022 Bulletin 2022/26**

(21) Application number: **19942464.9**

(22) Date of filing: **22.08.2019**

(51) International Patent Classification (IPC):
**H04W 56/00** *(2009.01)*   **H04W 72/04** *(2009.01)*

(52) Cooperative Patent Classification (CPC):
**H04W 56/00; H04W 72/04**

(86) International application number:
**PCT/JP2019/032923**

(87) International publication number:
**WO 2021/033328 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DoCoMo, Inc.
Tokyo 100-6150 (JP)**

(72) Inventors:
• **HARADA, Hiroki
Tokyo 100-6150 (JP)**

• **NAGATA, Satoshi
Tokyo 100-6150 (JP)**
• **KURITA, Daisuke
Tokyo 100-6150 (JP)**
• **SANO, Yousuke
Tokyo 100-6150 (JP)**
• **WANG, Jing
Beijing 100190 (CN)**

(74) Representative: **Hoffmann Eitle
Patent- und Rechtsanwälte PartmbB
Arabellastraße 30
81925 München (DE)**

(54) **TERMINAL**

(57)    A terminal searches for a radio frequency based on at least one of a channel raster and a synchronization raster. The terminal searches for the radio frequency based on at least one of the channel raster and the synchronization raster having a wider interval than when using a frequency band including one or a plurality of frequency ranges, in different frequency bands different from the frequency band.

FIG. 6

```
maxNARFCN          INTEGER ::= 3279165 -- Maximum value of NR carrier frequency
maxNARFCN-r17      INTEGER ::= 3516665 -- Maximum value of NR carrier frequency
```

EP 4 021 097 A1

**Description**

Technical Field

The present invention relates to a terminal that performs radio communication, and particularly to a terminal that searches for a radio frequency based on at least one of a channel raster and a synchronization raster.

Background Art

The 3rd generation partnership project (3GPP) is progressing specification of long term evolution (LTE) and LTE-Advanced (hereinafter, referred to as LTE including LTE-Advanced) for the purpose of further speeding up the LTE, and specification of 5th generation mobile communication system (5G, referred to as new radio (NR) or next generation (NG)).

The 3GPP Release 15 and 16 (NR) specify an operation in a plurality of frequency ranges, specifically, a band including FR1 (410 MHz to 7.125 GHz) and FR2 (24.25 GHz to 52.6 GHz). In the specifications after the Release 16, an operation in a band exceeding 52.6 GHz is being examined (Non-Patent Literature 1). A target frequency range in a study item (SI) ranges from 52.6GHz to 114.25GHz.

Further, the 3GPP Release 15 defines an arrangement of the channel raster and the synchronization raster applied to FR1 and FR2 (see Non-Patent Literatures 2 and 3).

The channel raster defines a subset of radio frequency (RF) reference frequencies ($F_{REF}$) that can be used to identify RF channel positions of uplink (UL) and downlink (DL). In addition, the synchronization raster can indicate a frequency position of a synchronization signal block that can be used by a terminal (user equipment (UE)) for acquiring system information when there is no explicit signaling of a synchronization signal block position.

The channel raster is configured based on the smallest subcarrier spacing (SCS) that may be applied to each frequency range (FR) (in the case of 3 GHz or higher).

The synchronization raster is configured based on fixed values for each FR (FR1 = 1.44 MHz (in the case of 3 GHz or higher), FR2=17.28 MHz). Further, the synchronization raster is limited so that a bandwidth of the synchronization signal block can be positioned within a bandwidth of any channel raster where a carrier with a minimum bandwidth is arranged.

Citation List

Non-Patent Literature

Non-Patent Literature 1: 3GPP TR 38.807 V0.1.0, 3rd Generation Partnership Project; Technical Specification Group Radio Access Network; Study on requirements for NR beyond 52.6 GHz (Release 16), 3GPP, March, 2019
Non-Patent Literature 2: 3GPP TS 38.101-1 V15.6.0, 3rd Generation Partnership Project; Technical Specification Group Radio Access Network; NR; User Equipment (UE) radio transmission and reception; Part 1:Range 1 Standalone (Release 15), 3GPP, June, 2019
Non-Patent Literature 3: GPP TS 38.101-2 V15.6.0, 3rd Generation Partnership Project; Technical Specification Group Radio Access Network; NR; User Equipment (UE) radio transmission and reception; Part 2:Range 2 Standalone (Release 15), 3GPP, June, 2019

Summary of Invention

However, when different frequency bands, such as a high frequency band exceeding 52.6 GHz, different from the FR1 and the FR2 are used, it is assumed that it is not necessarily appropriate to configure the channel raster and the synchronization raster settings of the Release 15 described above.

Specifically, the channel raster and the synchronization raster of the Release 15 defines a frequency band up to 100 GHz as a target, and do not target a frequency band exceeding 100 GHz. Also, it is assumed that an applicable subcarrier spacing is different from the FR1 and the FR2 in the different frequency bands.

Therefore, the present invention has been made in view of such a situation, and an object of the present invention is to provide a terminal capable of using a configuration of appropriate channel raster and synchronization raster even when different frequency bands different from FR1 and FR2 are used.

According to an aspect of the present disclosure, a terminal (UE 200) includes a control unit (control unit 270) that searches for a radio frequency based on at least one of a channel raster and a synchronization raster, in which the control unit searches for the radio frequency based on at least one of the channel raster and the synchronization raster having a wider interval than when using a frequency band including one or a plurality of frequency ranges FR1 and FR2, in different frequency bands FR3 and FR4 different from the frequency band.

According to an aspect of the present disclosure, a terminal (UE 200) includes a control unit (control unit 270) that searches for a radio frequency based on at least one of a channel raster and a synchronization raster, in which the control unit determines that the synchronization raster is not configured, in different frequency bands FR3 and FR4 different from a frequency band including one or a plurality of frequency ranges FR1 and FR2.

Brief Description of Drawings

Fig. 1 is an overall schematic configuration diagram of a radio communication system 10.
Fig. 2 is a diagram illustrating a frequency range used in the radio communication system 10.
Fig. 3 is a diagram illustrating a configuration example of radio frames, subframes, and slots used in the radio communication system 10.
Fig. 4 is a diagram illustrating a configuration example of a channel raster and a synchronization raster configured in the radio communication system 10.
Fig. 5 is a functional block configuration diagram of a UE 200.
Fig. 6 is a diagram illustrating a notification example (part 1) of NR-ARFCN according to configuration example 1.
Fig. 7 is a diagram illustrating a notification example (part 2) of NR-ARFCN according to the configuration example 1.
Fig. 8 is a diagram illustrating the notification example of the NR-ARFCN according to configuration example 2.
Fig. 9 is a diagram illustrating an example of a hardware configuration of the UE 200.

Description of Embodiments

Hereinafter, embodiments will be described with reference to the drawings. Note that the same functions or configurations will be denoted by the same or similar reference numerals, and a description thereof will be appropriately omitted.

(1) Overall Schematic Configuration of Radio Communication System

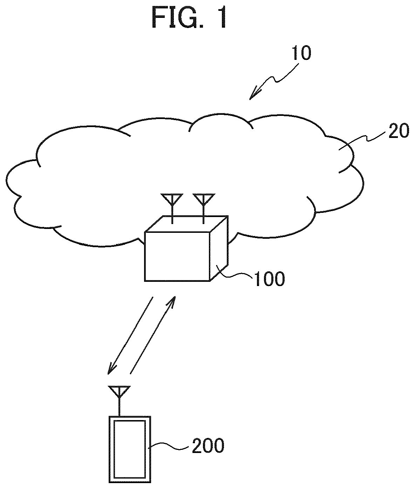

Fig. 1 is an overall schematic configuration diagram of a radio communication system 10 according to the present embodiment. The radio communication system 10 is a radio communication system according to 5G new radio (NR), and includes a next generation-radio access network 20 (hereinafter, referred to as NG-RAN 20) and a terminal 200 (hereinafter, referred to as UE 200).

The NG-RAN 20 includes a radio base station 100 (hereinafter, gNB 100). Note that a specific configuration of the radio communication system 10 that includes the number of gNBs and UEs is not limited to the example illustrated in Fig. 1.

The NG-RAN 20 actually includes a plurality of NG-RAN nodes, specifically, gNBs (or ng-eNBs), and is connected to a 5G core network (5GC) (not illustrated). Note that the NG-RAN 20 and the 5GC may be simply expressed as "network".

The gNB 100 is a radio base station according to 5G, and executes radio communication according to the UE 200 and 5G. The gNB 100 and the UE 200 can support massive multiple-input multiple-output (MIMO) that generates a beam with higher directivity, carrier aggregation (CA) that bundles and uses a plurality of component carriers (CCs), dual connectivity (DC) that simultaneously performs communication between the UE and each of two NG-RAN nodes, and the like, by controlling radio signals transmitted from a plurality of antenna elements.

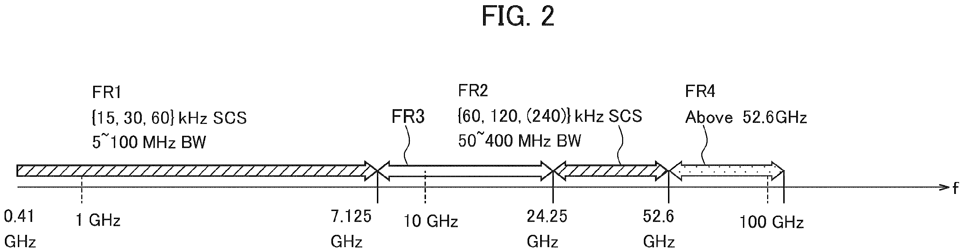

In addition, the radio communication system 10 supports a plurality of frequency ranges (FRs). Fig. 2 illustrates a frequency range used in the radio communication system 10.

As illustrated in Fig. 2, the radio communication system 10 corresponds to FR1 and FR2. Frequency bands of each FR are as follows.

- FR1:410 MHz to 7.125 GHz
- FR2:24.25 GHz to 52.6 GHz

In the FR1, sub-carrier spacing (SCS) of 15, 30, or 60 kHz is used and a bandwidth (BW) of 5 to 100 MHz is used. The FR2 has a frequency higher than that of the FR1, the SCS of 60 or 120 kHz (240 kHz may be included) is used, and a bandwidth (BW) of 50 to 400 MHz is used.

Note that the SCS may be interpreted as numerology. The numerology is defined in 3GPP TS38.300 and corresponds to one subcarrier spacing in a frequency domain.

Further, the radio communication system 10 supports a frequency band higher than that of the FR2. Specifically, the radio communication system 10 supports a frequency band exceeding 52.6 GHz and up to 114.25 GHz. Here, such a high frequency band is referred to as "FR4" for convenience. The FR4 belongs to so-called EHF (extremely high frequency, referred to as a millimeter wave). Note that the FR4 is a tentative name and may be called another name.

Further, the FR4 may be further divided. For example, the FR4 may be divided into a frequency range of 70 GHz or lower and a frequency range of 70 GHz or higher. Alternatively, the FR4 may be divided into more frequency ranges, or may be divided into frequencies other than 70 GHz.

In addition, here, the frequency band between the FR1 and the FR2 is referred to as "FR3" for convenience. The FR3 is a frequency band exceeding 7.125 GHz and less than 24.25 GHz.

In the present embodiment, the FR3 and FR4 are different from a frequency band including the FR1 and the FR2, and are called different frequency bands.

In particular, in a high frequency band such as the FR4, an increase of phase noise between carriers becomes a problem as described above. This may require the application of larger (wider) SCS or a single carrier waveform.

In addition, a narrower beam (that is, more beams) may be required due to a larger propagation loss. In addition, larger (wider) SCSs (and/or fewer FFT points), PAPR reduction mechanism, or the single carrier waveform may be required due to being more sensitive to non-linearity of PAPR and a power amplifier.

In order to solve such a problem, in the present embodiment, when using a band exceeding 52.6 GHz, cyclic prefix-orthogonal frequency division multiplexing (CP-OFDM)/discrete Fourier transform-spread (DFT-S-OFDM) having a larger sub-carrier spacing (SCS) is used may be applied.

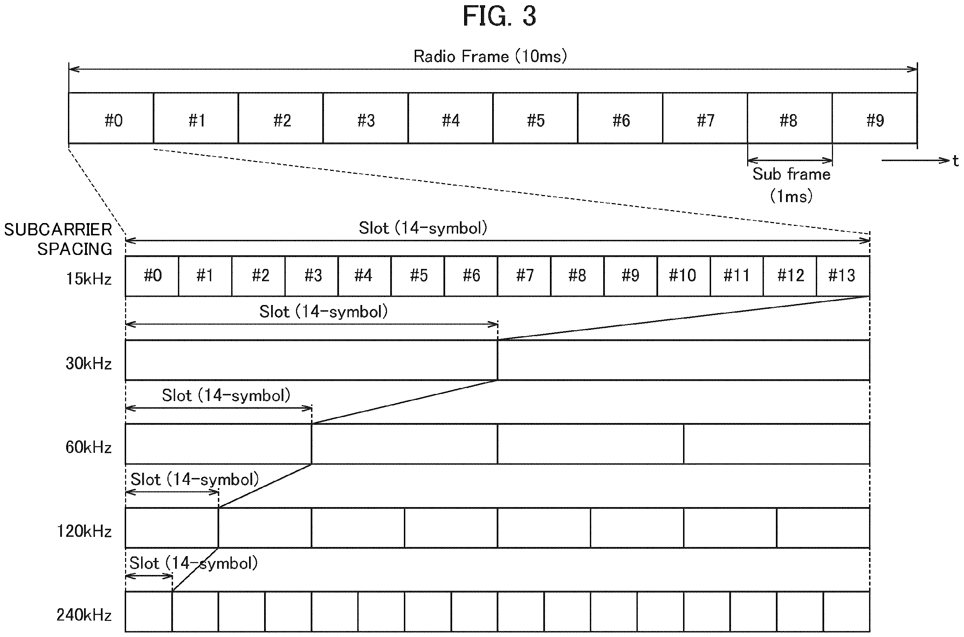

However, the larger the SCS, the shorter the symbol/cyclic prefix (CP) period and the slot period (when a configuration of 14 symbols/slot is maintained). Fig. 3 illustrates a configuration example of radio frames, subframes, and slots used in the radio communication system 10. In addition, Table 1 shows the relationship between the SCS and the symbol period.

[Table 1]

| SCS | 15 kHz | 30 kHz | 60 kHz | 120 kHz | 240 kHz | 480 kHz | 960 kHz |
|---|---|---|---|---|---|---|---|
| Symbol Period (unit: $\mu$s) | 66.6 | 33.3 | 16.65 | 8.325 | 4.1625 | 2.08125 | 1.040625 |

As shown in Table 1, when the configuration of 14 symbols/slot is maintained, the larger (wider) the SCS is, the shorter the symbol period (and the slot period) is.

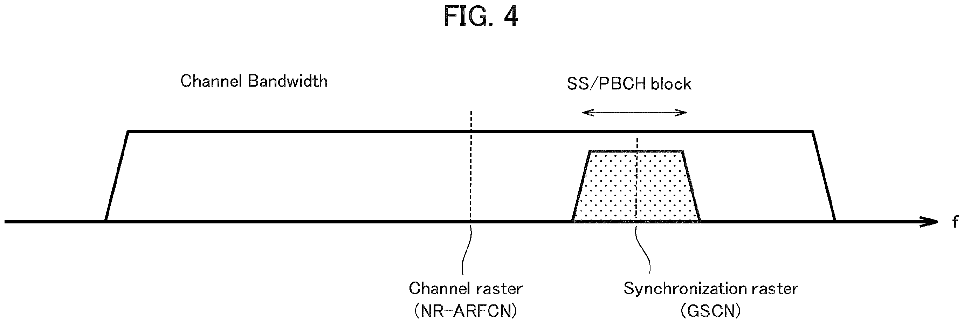

Fig. 4 illustrates a configuration example of a channel raster and a synchronization raster configured in the radio communication system 10. As illustrated in Fig. 4, the channel raster corresponds to a center frequency of a carrier. The channel raster may be interpreted as a minimum setting unit for determining the center frequency of the carrier within a channel bandwidth. For example, in the case of a 60 kHz channel raster, the center frequency can be set in units of 60 kHz.

Specifically, the channel raster defines a subset of RF reference frequencies ($F_{REF}$) that can be used to identify radio frequency (RF) channel positions of uplink (UL) and downlink (DL). The channel raster may be called a frequency raster, a frequency channel raster, or the like.

$F_{REF}$ is designated by NR-absolute radio frequency channel number (NR-ARFCN). $F_{REF}$ is defined as follows. The NR absolute radio frequency channel number may be abbreviated as a frequency channel number or the like.

$$F_{REF} = F_{REF-Offs} + \Delta F_{Global} \ (N_{REF} - N_{REF-Offs})$$

Here, $N_{REF}$ is NR-ARFCN. $\Delta F_{Global}$ indicates granularity of the channel raster. $F_{REF-Offs}$ and $N_{REF-Offs}$ are offsets for calculating $F_{REF}$ and are given by the table defined in 3GPP TS38.101-1 (FR1) or 38.101-2 (FR2).

In the FR1 and FR2, the channel rasters are as follows.

(FR1)

- 0 to 3GHz: Every 5 kHz
- 3 to 24.25GHz: Every 15 kHz

(FR2)

- 24.25 to 100GHz: Every 60 kHz

The synchronization raster can indicate a frequency position of a synchronization signal block (SS/PBCH block) that can be used by the UE 200 to acquire system information, specifically, System Information Block 1 (may be called remaining minimum system information (RMSI)). The synchronization raster may be interpreted as a frequency position that searches for the presence or absence of a synchronization signal (SS) when the UE 200 executes initial access (Initial access) on the radio communication system 10, executes cell reselection, or the like.

The frequency position of the SS/PBCH block is defined as $SS_{REF}$ having a corresponding NR global synchronization channel number (NR-GSCN). The NR global synchronization channel number may be abbreviated as a synchronization channel number or the like.

In the FR1 and FR2, the synchronization raster is as follows.

- (FR1)
- 0 to 3 GHz: 3 positions spaced by 100 kHz every 1.2 MHz
- 3 to 24.25GHz: Every 1.44 MHz
- (FR2)
- 24.25 to 100GHz: Every 17.28 MHz

In this embodiment, the channel raster and the synchronization raster for a high frequency band such as FR4 (or different frequency bands different from FR1 and FR2 including FR3) are configured. Details of each configuration will be described later.

(2) Functional Block Configuration of Radio Communication System

Next, the functional block configuration of the radio communication system 10 will be described. Specifically, a functional block configuration of the UE 200 will be described.

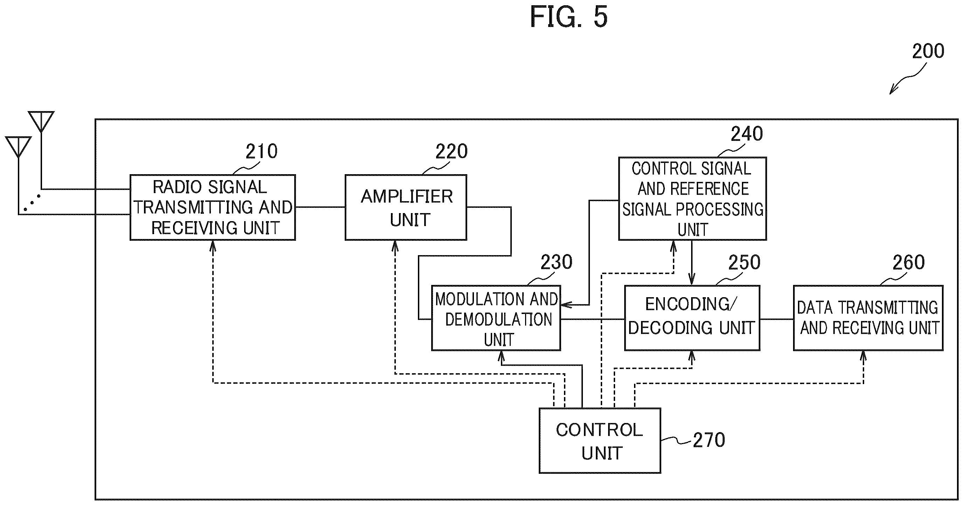

Fig. 5 is the functional block configuration diagram of the UE 200. As illustrated in Fig. 5, the UE 200 includes a radio signal transmitting and receiving unit 210, an amplifier unit 220, a modulation and demodulation unit 230, a control signal and reference signal processing unit 240, an encoding/decoding unit 250, a data transmitting and receiving unit 260, and a control unit 270.

The radio signal transmitting and receiving unit 210 transmits and receives a radio signal according to NR. The radio signal transmitting and receiving unit 210 corresponds to Massive MIMO, CA used by bundling a plurality of CCs, DC performing simultaneous communication between the UE and each of the two NG-RAN nodes, and the like.

Further, the radio signal transmitting and receiving unit 210 transmits and receives a radio signal of a predetermined radio frequency according to the channel raster and the synchronization raster applied in the radio communication system 10.

As described above, the SS/PBCH block (SSB) is transmitted from the gNB 100 on the carrier frequency designated by the synchronization raster (NR-GSCN).

The SSB is a block of a synchronization signal/broadcast channel composed of a synchronization signal (SS) and a physical broadcast channel (PBCH). Mainly, the UE 200 is periodically transmitted to perform a cell ID and a reception timing detection at the start of communication. The SSB is also used for measuring the reception quality of each cell.

The SS is composed of a primary synchronization signal (PSS: primary SS) and a secondary synchronization signal (SSS: secondary SS).

The PSS is a known signal that the UE 200 first attempts to detect in a cell search procedure. The SSS is a known signal transmitted to detect a physical cell ID in the cell search procedure.

The PBCH includes information necessary for the UE 200 to establish frame synchronization with an NR cell formed by the gNB 100 after detecting the SS/PBCH block such as a radio frame number (system frame number (SFN)) and an index for identifying symbol positions of a plurality of SS/PBCH blocks in a half frame (5 milliseconds).

In addition, the PBCH can also include system parameters necessary for receiving system information (SIB).

The amplifier unit 220 is configured by a power amplifier (PA)/low noise amplifier (LAN) or the like. The amplifier unit 220 amplifies a signal output from the modulation and demodulation unit 230 to a predetermined power level. Further, the amplifier unit 220 amplifies an RF signal output from the radio signal transmitting and receiving unit 210.

The modulation and demodulation unit 230 executes data modulation and demodulation, transmit power setting, resource block allocation, and the like for each predetermined communication destination (gNB 100 or other gNBs).

In the present embodiment, CP-OFDM and DFT-S-OFDM can be applied. In particular, in the present embodiment, the DFT-S-OFDM may be used not only in the uplink (UL) but also in the downlink (DL).

The control signal and reference signal processing unit 240 executes processing regarding various control signals transmitted and received by the UE 200 and processing regarding various reference signals transmitted and received by the UE 200.

Specifically, the control signal and reference signal processing unit 240 receives various control signals transmitted from the gNB 100 via a predetermined control channel, for example, a control signal of a radio resource control layer (RRC). In addition, the control signal and reference signal processing unit 240 transmits various control signals to the gNB 100 via a predetermined control channel.

Further, the control signal and reference signal processing unit 240 executes processing using a reference signal (RS) such as a demodulation reference signal (DMRS) and a phase tracking reference signal (PTRS).

Further, the DMRS is a known reference signal (pilot signal) between a base station for each terminal and a terminal for estimating a fading channel used for data demodulation. The PTRS is a reference signal for each terminal for the purpose of estimating phase noise which is a problem in a high frequency band.

In addition to the DMRS and the PTRS, the reference signal also includes a channel state information-reference signal (CSI-RS) and a sounding reference signal (SRS).

Further, the channel includes a control channel and a data channel. The control channel includes a physical downlink control channel (PDCCH), a physical uplink control channel (PUCCH), a physical random access channel (PRACH), a PBCH, and the like.

In addition, the data channel includes a physical downlink shared channel (PDSCH), a physical uplink shared channel (PUSCH), and the like. The data may mean data transmitted via the data channel.

The encoding/decoding unit 250 executes data division/concatenation and channel coding/decoding for each predetermined communication destination (gNB 100 or other gNB).

Specifically, the encoding/decoding unit 250 divides data output from the data transmitting and receiving unit 260 into a predetermined size, and executes the channel coding on the divided data. Further, the encoding/decoding unit 250 decodes data output from the modulation and demodulation unit 230 and concatenates the decoded data.

The data transmitting and receiving unit 260 executes transmission and reception of a protocol data unit (PDU) and a service data unit (SDU). Specifically, the data transmitting and receiving unit 260 executes assembling and disassembling of the PDU/SDU and the like in a plurality of layers (such as medium access control layer (MAC), radio link control layer (RLC), packet data convergence protocol layer (PDCP), and the like). Further, the data transmitting and receiving unit 260 executes data error correction and retransmission control based on hybrid automatic repeat request (hybrid ARQ).

The control unit 270 controls each functional block constituting the UE 200. In particular, in the present embodiment, the control unit 270 searches for a radio frequency based on at least one of the channel raster and the synchronization raster.

The control unit 270 searches for the range of the radio frequency based on the channel raster, specifically, the RF reference frequency ($F_{REF}$). Further, the control unit 270 searches for the range of the radio frequency based on the synchronization raster, specifically, the frequency position ($SS_{REF}$) of the SS/PBCH block. Note that the searching may be read as monitoring, scanning or the like the range of the radio frequency.

The information (including NR-ARFCN or NR-GSCN) on the positions of the channel raster and the synchronization raster to be searched may be notified in advance in the radio communication system 10 (NR system), or may be notified by lower layer (L1) or upper layer (such as RRC) signaling.

In the present embodiment, the control unit 270 searches for a radio frequency based on at least one of the channel raster and the synchronization raster having a wider interval than when using FR1 and FR2, in a frequency band including one or a plurality of frequency ranges (FR), specifically, at least one of FR3 and FR4 (different frequency bands) different from FR1 and FR2. The "interval" mentioned here means an interval of a frequency at which the channel raster or the synchronization raster is arranged, but may be interpreted as the interval of the raster.

Alternatively, the control unit 270 may determine that the synchronization raster is not set in at least some bands of the FR3 and the FR4 (different frequency bands). That is, the control unit 270 determines that an NR standalone (SA) operation is not supported in the different frequency bands and the primary cell (PCell) is not configured.

In addition, the control unit 270 may determine the position of the synchronization raster to which the system information is notified, based on a numerical value indicating an offset or a range of the NR-GSCN (synchronization channel number).

Specifically, the control unit 270 can determine the synchronization raster notified by the SIB1 (RMSI) based on a numerical value related to the offset and range of the NR-GSCN defined in chapter 13 in 3GPP TS38.213, specifically, based on $k_{SSB}$ and pdcch-ConfigSIB1 included in PBCH.

Alternatively, the control unit 270 may determine the position of the synchronization raster to which the SIB1 (RMSI) is notified based on the numerical value indicating the offset or range of the NR-GSCN (synchronization channel number) notified using a part of the synchronization signal block or the reference signal.

The synchronization signal block mentioned here includes PSS, SSS, and PBCH. Further, the reference signal mentioned here includes the DMRS, but may include the other reference signal (RS) described above.

Note that a specific position determination method of a synchronization raster will be described later.

(3) Operation of Radio Communication System

Next, an operation of the radio communication system 10 will be described. Specifically, the operation of searching the channel raster and the synchronization raster of the UE200 that can solve the problem will be described while describing the problem when applying the channel raster and synchronization raster defined for the FR1 and the FR2 to the high frequency band such as the FR4.

(3.1) Problem

As described above, the channel raster and the synchronization raster are defined for the FR2 with a frequency up to 100 GHz as a target. Therefore, in the FR4, a frequency range from 100 GHz to 114.25 GHz is not defined.

In addition, the channel raster (3GHz or higher) is defined based on the smallest available subcarrier spacing (FR1:15kHz, FR2:60kHz). On the other hand, as described above, in the case of the FR3 or the FR4, the minimum available subcarrier spacing (SCS) may be larger than that of the FR1 or the FR2.

Therefore, it may not necessarily be appropriate to directly apply the channel raster for the FR1 or the FR2 to the FR3 or the FR4. However, a value of the NR-ARFCN has already been defined for a frequency up to 100 GHz as a target.

The synchronization raster is limited so that an SSB bandwidth can be positioned within a minimum channel bandwidth when any channel raster is used. In the case of the FR3 or the FR4, at least one of the minimum channel bandwidth and the bandwidth of the SSB may be different from that of the FR1 or the FR2.

Therefore, similar to the channel raster, it may not necessarily be appropriate to directly apply the synchronization raster for the FR1 or the FR2 to the FR3 or the FR4.

(3.2) Configuration of Channel Raster and Synchronization Raster for New Frequency range

Hereinafter, an example of configuring the channel raster and the synchronization raster for a new FR (FR3 or FR4) capable of avoiding the complexity of the operation of the UE 200 while supporting a large number of frequency ranges (FR) will be described.

Specifically, the following configuration example will be described.

- (Configuration Example 1): When it exceeds 100 GHz (for example, up to 114.25 GHz), reuse the channel raster and the synchronization raster for 100 GHz or less.
- (Configuration Example 2): When it exceeds 100 GHz, configure a new channel raster and/or synchronization raster
- (Configuration Example 3): When it exceeds a predetermined frequency of 52.6GHz or higher, configure a new channel raster and/or synchronization raster
- (Configuration Example 4): When it exceeds a predetermined frequency of 52.6 GHz or higher, do not configure the synchronization raster

Here, the new channel raster and synchronization raster are characterized by having a wider frequency interval than the channel raster and the synchronization raster for the FR1 or the FR2.

Hereinafter, each configuration example will be described.

(3.2.1) Configuration Example 1

In this configuration example, the channel raster and the synchronization raster for 100 GHz or less are reused even in a frequency band exceeding 100 GHz.

Table 2 shows channel raster (NR-ARFCN) related parameters in the configuration example 1. Table 2 corresponds to the table for the FR2 defined in 3GPP TS38.101-2, and an underlined part indicates changed parts (the same applies below).

[Table 2]

As shown in Table 2, the FR extends to 114.25 GHz and the $N_{REF}$ (NR-ARFCN) extends to 3516665.

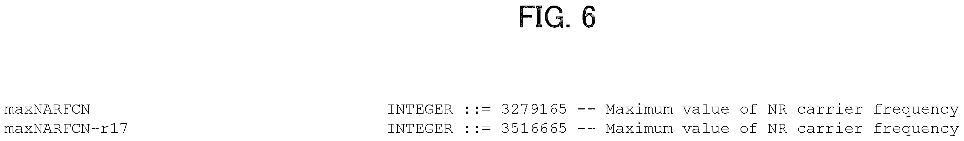

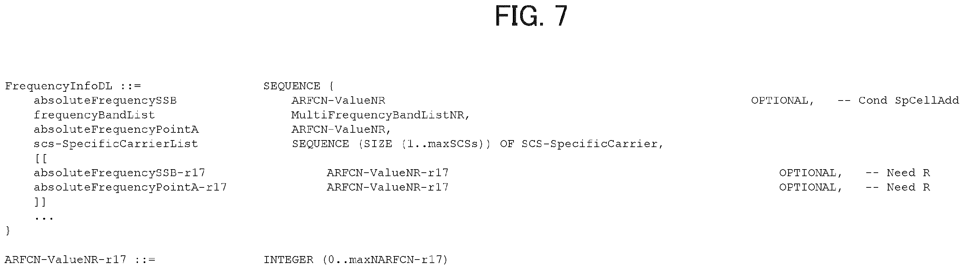

Figs. 6 and 7 are diagrams illustrating the notification example of the NR-ARFCN according to the configuration example 1. Specifically, Fig. 6 illustrates a notification example of the NR-ARFCN included in RRC multiplicity and type constraint values defined in chapter 6.4 in 3GPP TS38.331.

As illustrated in Fig. 6, 3516665 is notified as a maximum value of the NR-ARFCN, that is, "maxNARFCN-r17" indicating a maximum value of an NR carrier frequency. Note that in Fig. 6, it is described as "maxNARFCN-r17" (assuming 3GPP Release 17), but other Release (for example, Release 18) may be used.

Fig. 7 illustrates a notification example (Fig. 7 is an example of FrequencyInfoDL) of the NR-ARFCN included in FrequencyInfoDL, FrequencyInfoUL, and the like defined in chapter 6.3.2 in 3GPP TS38.331.

As illustrated in Fig. 7, the maximum value of the NR-ARFCN is notified by "ARFCN-ValueNR-r17". Note that even in Fig. 7, it is described as "ARFCN-ValueNR-r17" (assuming 3GPP Release 17), but other Release (for example, Release 16) may be used.

Table 3 shows synchronization raster (NR-GSCN) related parameters in the configuration example 1.

[Table 3]

As shown in Table 3, the FR extends to 114.25 GHz and N used for $SS_{REF}$ calculation extends to 5208. In addition, the range of the NR-GSCN (GSCN) extends to 27464.

In this way, the FR is changed up to 114.25 GHz, and the ranges of the NR-ARFCN and the NR-GSCN are changed, but the basic configurations of the channel raster and the synchronization raster are the same as those of the channel raster and the synchronization raster for the FR1 or the FR2.

(3.2.2) Configuration Example 2

- In this configuration example 2, when the bandwidth exceeds 100 GHz, a new channel raster and/or synchronization raster is configured. Hereinafter, parts different from the configuration example 1 described above will be mainly described.

Table 4 shows the channel raster (NR-ARFCN) related parameters in the configuration example 2.

[Table 4]

As shown in Table 4, $\Delta F_{Global}$ indicating the granularity of the channel raster is set to be a value (240 kHz) larger than 60 kHz applied to 100 GHz or less. Note that the $\Delta F_{Global}$ (and $F_{REF}$) may match or may be different from the minimum SCS among the available SCSs in the FR (100 to 114.25 GHz), but is preferable to be larger than a value applied to 100 GHz or less.

Further, as shown in Table 4, $N_{REF}$ (NR-ARFCN) also extends to 3338540.

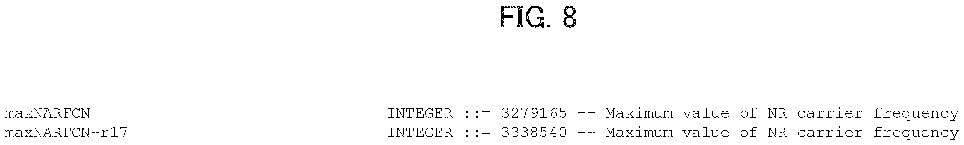

Fig. 8 illustrates the notification example of the NR-ARFCN according to the configuration example 2. Specifically, similar to Fig. 6, Fig. 8 illustrates a notification example of the NR-ARFCN included in RRC multiplicity and type constraint values defined in chapter 6.4 in 3GPP TS38.331.

As illustrated in Fig. 8, 3338540 is notified as a maximum value (maxNARFCN-r17) of NR-ARFCN.

Note that the notification of the NR-ARFCN included in the FrequencyInfoDL, FrequencyInfoUL, and the like is the same as in the configuration example 1 (see Fig. 6).

Table 5 shows the synchronization raster (NR-GSCN) related parameters in the configuration example 2.

[Table 5]

As shown in Table 5, in the frequency band exceeding 100 GHz, the interval of the synchronization raster is larger than 17.28 MHz. Specifically, the interval of the synchronization raster depends on the minimum channel bandwidth and the SSB bandwidth. Further, in the frequency band exceeding 100 GHz, the minimum channel bandwidth is preferably wider than 50 MHz.

The range of N and NR-GSCN (GSCN) used for calculation of $SS_{REF}$ also extends according to the setting of the interval of the synchronization raster.

(3.2.3) Configuration Example 3

• In this configuration example 3, when the bandwidth exceeds a predetermined frequency of 52.6GHz or higher, a new channel raster and/or synchronization raster is configured.

Table 6 shows the channel raster (NR-ARFCN) related parameters in the configuration example 2.

[Table 6]

As shown in Table 6, $\Delta F_{Global}$ is set to be a value (for example, 120 kHz) larger than 60 kHz applied to 52.6 GHz or less. Note that $\Delta F_{Global}$ (and $F_{REF}$) may match or may be different from the minimum SCS among the SCSs that can be used in the FR (52.6 to 114.25 GHz).

Note that in Table 6, the applied $\Delta F_{Global}$ varies depending on whether the bandwidth is 52.6 GHz or less, but a start frequency to which the different (large) $\Delta F_{Global}$ is applied may be a bandwidth, for example, 70.0 GHz or the like other than 52.6 GHz.

In addition, the range of the NR-ARFCN($N_{REF}$) may be newly defined. For example, the value of the NR-ARFCN defined in the channel raster for FR2 may be reused for other frequency positions (for example, in Release 15, there are values that are not actually used). Note that the range and/or maximum value of the NR-ARFCN may or may not extend.

Alternatively, the range and/or the maximum value of the NR-ARFCN may extend similarly to the configuration example 1 or the configuration example 2.

In addition, the notification of the NR-ARFCN is similar to the configuration example 2.

Table 7 shows the synchronization raster (NR-GSCN) related parameters in the configuration example 3.

[Table 7]

As shown in Table 7, in the frequency band exceeding 52.6GHz, the interval of the synchronization raster is larger than 17.28 MHz. In addition, similar to the configuration example 2, the interval of the synchronization raster depends on the minimum channel bandwidth and the SSB bandwidth. Further, in the frequency band exceeding 52.6GHz, the minimum channel bandwidth is preferably wider than 50 MHz.

Note that in Table 7, the applied interval of the synchronization raster varies depending on whether the bandwidth is 52.6 GHz or less, but the start frequency to which the different (large) interval of the synchronization raster is applied may be a bandwidth, for example, 70.0 GHz or the like, other than 52.6 GHz. Further, the start frequency may be different between the channel raster and the synchronization raster.

Similar to the NR-ARFCN, the range of the NR-GSCN may be newly defined. For example, the value of the NR-GSCN defined in the synchronization raster for the FR1 or the FR2 may be reused for other frequency positions.

Alternatively, the range of the NR-GSCN may extend similarly to the configuration example 1 or the configuration example 2.

(3.2.4) Configuration Example 4

In this configuration example, when the bandwidth exceeds a predetermined frequency of 52.6 GHz or higher, the synchronization raster is not configured. The non-configuration of the synchronization raster may be read as not defined. That is, in the radio communication system 10 (NR system), the synchronization raster indicating the frequency position of the SSB is not used in the frequency band exceeding a predetermined frequency of 52.6 GHz or higher.

In the case of this configuration example, the UE 200 may assume that the frequency band exceeding a predetermined frequency of 52.6 GHz or higher is not used for the PCell. Therefore, the UE 200 does not perform the initial access or the cell reselection in the frequency band.

(3.2.5) Other

The contents of the configuration examples 1 to 4 described above may be applied to either one of the channel raster and the synchronization raster, or may be applied to both simultaneously.

(3.3) Instruction of Offset/Range of NR-GSCN

Next, an instruction example of the offset/range of the NR-GSCN to the UE 200 by the network in the configuration examples 1 to 3 described above will be described. Specifically, the offset and range of the NR-GSCN defined in chapter 13 in 3GPP TS38.213 are used.

Tables 8 and 9 are offset-related tables of the NR-GSCN defined in chapter 13 in 3GPP TS38.213.

[Table 8]

[Table 9]

When $k_{SSB}$ is 24 to 31 (in the case of the FR1) or 12 to 15 (FR2), the UE 200 assumes that the SSB detected by the search does not include system information, specifically, SIB1 (RMSI). When $k_{SSB}$ has a value other than the above values, the UE 200 recognizes a subcarrier offset between the RB of the SSB detected from $k_{SSB}$ and the RB of the PDCCH/PDSCH for the SIB1.

Specifically, as shown in Tables 8 and 9, when $k_{SSB}$ is 24 to 30 (FR1) or 12 to 14 (FR2), the UE200 identifies the GSCN offset with the SSB including the SIB1 based on "pdcch-ConfigSIB1".

When the $k_{SSB}$ is 31 (FR1) or 15 (FR2), the UE200 identifies the range of the GSCN in which the SSB including the SIB1 does not exist based on "pdcch-ConfigSIB1".

In this embodiment, when the SSB is transmitted in the FR1 and the FR2, that is, in the existing frequency range, the range of the GSCN considering the high frequency band such as the GSCN offset and/or FR4 may be indicated using the reserved entries (see the underlined parts) illustrated in Tables 8 and 9.

For example, the network may use the reserved entry to instruct the UE 200 as follows.

- (Instruction Example 1): Instruct the presence or absence of the synchronization raster in which the SSB is transmitted in a predetermined frequency range

By this way, when there is no synchronization raster in which the SSB is transmitted, the UE200 may omit the search for the frequency range.

- (Instruction Example 2): Instruct that the GSCN offset is greater than 256 or less than -256

Note that the granularity of a value larger than 256 and/or a value smaller than -256 may be 1 or larger.

Further, when the SSB is transmitted in the high frequency band such as the FR4 (or FR3), the network may instruct the UE 200 as follows using the reserved entries according to the configuration examples 1 to 3 described above.

- (In the case of configuration example 1): Similar to the FR1 and the FR2, the $k_{SSB}$ may be necessary to indicate the offset of the subcarrier between the SSB resource block (RB) and the PDCCH/PDSCH RB. When the $k_{SSB}$ is one of the specific values, the UE 200 may identify the GSCN offset and/or the range of the GSCN from the "pdcch-ConfigSIB1".

In this case, the offset value and granularity of the GSCN may be the same as or different from FR2. Further, the range (start and end) and/or granularity of the GSCN may be the same as or different from the FR2.

- (In case of configuration examples 2 and 3): Unlike the configuration example 1, there may be a case where the $k_{SSB}$ is necessary or where the $k_{SSB}$ is not necessary. For example, the channel raster and/or the synchronization raster can be defined so that the positions of the SSB RB and the PDCCH/PDSCH RB are aligned. In this case, specifically, the network may issue the instruction using any of the following methods.

- (Method 1): At least one PBCH bit is used to indicate whether the SSB is associated with the SIB1 (RMSI).

When the SSB is not associated with the SIB1 (RMSI), the bit of the "pdcch-ConfigSIB1" and other PBCH bits are used to instruct the offset of the GSCN and/or the range of the GSCN.

Further, as in the case of the configuration example 1, the offset value and granularity of the GSCN, the range (start and end) and/or the granularity of the GSCN may be the same as or different from the FR2.

- (Method 2): Instruct whether or not the SSB is associated with the SIB1 (RMSI) using one of the PSS/SSS/DMRS included in the PBCH sequence

In this case, an indication of the offset and range of the GSCN may be the same as in Method 1.
- (Method 3): The UE200 assumes that the SSB of the high frequency band is not associated with the SIB1 (RMSI) (corresponding to configuration example 4 described above)

In this case, the indication of the offset and range of the GSCN is naturally unnecessary.

(4) Action and Effect

According to the embodiment described above, the following effects can be obtained. Specifically, the UE200 can search for the radio frequency based on at least one of the channel raster and the synchronization raster having the wider interval when using the FR3 and the FR4 than when using the FR1 and the FR2 in the frequency band.
Therefore, even if the subcarrier spacing (SCS) is large, the UE200 may appropriately configure the channel raster and the synchronization raster using different frequency bands different from the FR1 and the FR2 such as a high frequency band exceeding 52.6 GHz.
In addition, the UE 200 can also determine that the synchronization raster is not configured in different frequency bands different from the FR1 and the FR2. For this reason, the UE 200 can use the configuration of the appropriate channel raster and synchronization raster even when the standalone (SA) operation is not supported in different frequency bands, or the like.
In the present embodiment, the UE 200 may determine the position of the synchronization raster to which the SIB1 (RMSI) is notified, based on the PBCH including the information indicating the offset or range of the NR-GSCN (synchronization channel number). Alternatively, the UE 200 may determine the position of the synchronization raster to which the SIB1 (RMSI) is notified based on the numerical value indicating the offset or range of the NR-GSCN (synchronization channel number) notified using a part of the synchronization signal block or the reference signal.
Therefore, the UE 200 can skip the synchronization raster to which the SIB1(RMSI) is not notified based on the value notified from the network, and can efficiently search for the position of the synchronization raster in which the SIB1(RMSI) is notified.

(5) Other Embodiments

Although the contents of the present invention have been described hereinabove with reference to the embodiments, it is obvious to those skilled in the art that the present invention is not limited to these descriptions, and can be variously modified and improved.
For example, in the embodiment described above, the FR4 exceeding 52.6 GHz has been mainly described, but the configuration examples of the channel raster and/or synchronization raster described above is also applied to the FR3 or the like having a frequency lower than 52.6 GHz.
Further, although partly described in the embodiments described above, the start frequency to which the configuration of the new channel raster and/or synchronization raster different from the FR1 and the FR2 is applied is not limited to 52.6 GHz or 100 GHz, and may be 70 GHz or other frequencies.
In addition, the configuration diagram (Fig. 5) used for explaining the above-described embodiment illustrates blocks of functional unit. Those functional blocks (components) can be realized by any combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by the plurality of devices. The functional blocks may be realized by combining software with the one device or the plural devices mentioned above.
Functions include determining, deciding, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

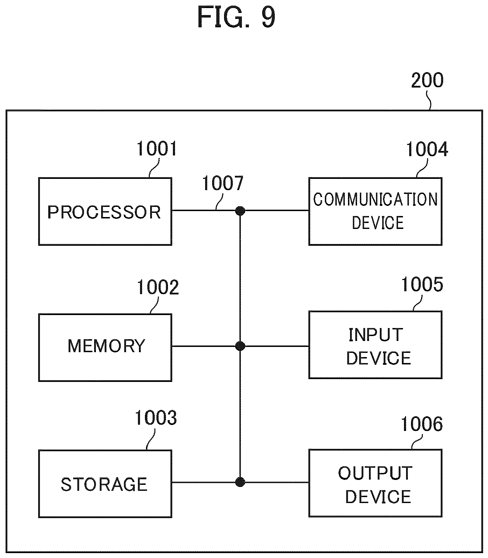

Furthermore, the above-described UE 200 may also function as a computer that performs the processing of the radio communication method of the present disclosure. Fig. 9 is a diagram illustrating an example of a hardware configuration of the UE 200. As illustrated in Fig. 9, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or a plurality of the devices illustrated in the figure, or can be constituted without including a part of the devices.

Each functional block (see Fig. 5) of the UE 200 can be realized by any of hardware elements of the computer device or a desired combination of the hardware elements.

In addition, each function of the UE 200 is realized by causing the processor 1001 to perform computing by loading predetermined software (program) on the hardware such as the processor 1001 and the memory 1002, controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a program (program code), a software module, data, and the like from the storage 1003 and/or the communication device 1004 into the memory 1002, and executes various processes according to the data. As the program, a program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory, and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be eliminated after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (remote radio head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows communication between a base station and a mobile station to be replaced with communication between a plurality of mobile stations (for example, may be referred to as device-to-device (D2D), vehicle-to-everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The radio frame may be composed of one or a plurality of frames in the time domain. One frame or each of the plurality of frames in the time domain may be referred to as a subframe.

The subframe may be composed of one or a plurality of slots in the time domain. The subframe may also be a fixed time length (for example, 1 ms) that does not depend on numerology.

The numerology may be a communication parameter applied to at least one of transmission and reception of a certain signal or channel. The numerology may indicate at least one of, for example, subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in a time domain, and the like.

The slot may be composed of one or a plurality of symbols (orthogonal frequency division multiplexing (OFDM)) symbols, single carrier frequency division multiple access (SC-FDMA) symbol, and the like in the time domain. The slot may be a time unit based on numerology.

The slot may include a plurality of minislots. Each minislot may be composed of one or a plurality of symbols in the time domain. In addition, the minislot may be referred to as a sub-slot. The minislot may be configured with a smaller number of symbols than that of the slot. A PDSCH (or PUSCH) transmitted in a time unit larger than a minislot may be referred to as a PDSCH (or PUSCH) mapping type A. A PDSCH (or PUSCH) transmitted using a minislot may be referred to as a PDSCH (or PUSCH) mapping type B.

All of the radio frame, the subframe, the slot, the minislot, and the symbol represent time units at the time of transmitting a signal. The radio frame, the subframe, the slot, the minislot, and the symbol may have different names corresponding thereto, respectively.

For example, one subframe may be referred to as a transmission time interval (TTI), a plurality of consecutive subframes may be referred to as TTI, and one slot or one minislot may be referred to as TTI. That is, at least one of the subframe and the TTI may be a subframe (1 ms) in the existing LTE, a period (for example, 1 to 13 symbols) shorter than 1 ms, or a period longer than 1 ms. Note that a unit representing TTI may be called a slot, a minislot, or the like instead of a subframe.

Here, the TTI refers to a minimum time unit of scheduling in radio communication, for example. For example, in the LTE system, the base station performs scheduling to allocate radio resources (frequency bandwidth, transmission power, and the like that can be used in each user terminal) to each user terminal in units of TTI. Note that the definition of the TTI is not limited thereto.

The TTI may be a transmission time unit such as a channel-encoded data packet (transport block), a code block, and a code word, or may also be a processing unit such as scheduling or link adaptation. Note that when the TTI is given, a time interval (for example, the number of symbols) in which the transport block, the code block, the code word, and the like are actually mapped may be shorter than the TTI.

Note that when one slot or one minislot is referred to as the TTI, one or more TTIs (that is, one or more slots or one or more minislots) may be the minimum time unit of the scheduling. Further, the number of slots (the number of minislots) constituting the minimum time unit of the scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a minislot, a subslot, a slot, and the like.

Note that the long TTI (for example, normal TTI, subframe, and the like) may be read as a TTI having a time length exceeding 1 ms, and the short TTI (for example, a shortened TTI) may be read as a TTI that is less than the long TTI and has a TTI length of 1 ms or more.

The resource block (RB) is a resource allocation unit in the time domain and the frequency domain, and may include one or a plurality of consecutive subcarriers in the frequency domain. The number of subcarriers included in the RB may be the same regardless of the numerology, for example, 12. The number of subcarriers included in the RB may be determined based on the numerology.

Further, the time domain of the RB may include one or a plurality of symbols, and may have a length of 1 slot, 1 minislot, 1 subframe, or 1 TTI. 1 TTI, one subframe, and the like may be composed of one or a plurality of resource blocks.

Note that one or a plurality of RBs may be referred to as a physical resource block (physical RB: PRB), a sub-carrier group (SCG), a resource element group (REG), a PRB pair, an RB pair, and the like.

In addition, the resource block may be composed of one or a plurality of resource elements (RE). For example, 1 RE may be a radio resource region of one subcarrier and one symbol.

A bandwidth part (BWP) (may be called a partial bandwidth, and the like) may represent a subset of consecutive common resource blocks (RBs) for certain numerology in a certain carrier. Here, the common RB may be specified by an RB index based on a common reference point of the carrier. The PRB may be defined in a certain BWP and numbered within the BWP.

The BWP may include a UL BWP and a DL BWP. One or a plurality of BWPs may be configured in one carrier for the UE.

At least one of the configured BWPs may be active, and it may not be assumed that the UE transmits and receives a predetermined signal/channel outside the active BWP. Note that "cell", "carrier", and the like in this disclosure may be read as "BWP".

The structures of the radio frame, the subframe, the slot, the minislot, the symbol, and the like, described above are merely examples. For example, the configurations of the number of subframes included in a radio frame, the number of slots per subframe or radio frame, the number of minislots included in the slot, the number of symbols and RBs included in the slot or minislot, the number of subcarriers included in the RB, the number of symbols in the TTI, the symbol length, the cyclic prefix (CP) length, and the like can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with a "unit", a "circuit" a, "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The term "determining" and "deciding" used in the present disclosure may include a wide variety of motions. The "determining" and "deciding" may include, for example, judging, calculating, computing, processing, deriving, investigating, looking up (search, inquiry) (for example, searching in a table, a database or another data structure), and may include ones regarding ascertaining as the "determining" and "deciding". In addition, the "determining" and "deciding" may include one regarding "receiving" (for example, receiving information), transmitting (for example, transmitting information), an input, an output, accessing (for example, accessing data in memory) as "determining" and "deciding". In addition, the "determining" and "deciding" may include ones regarding ones such as resolving, selecting, choosing, establishing, and comparing as "determining" and "deciding". That is, the "determining" and "deciding" can include considering some operation as performing the "determining" and "deciding". In addition, the "determining (deciding)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

| | |
|---|---|
| 10 | Radio communication system |
| 20 | NG-RAN |
| 100 | gNB |
| 200 | UE |
| 210 | Radio signal transmitting and receiving unit |
| 220 | Amplifier unit |
| 230 | Modulation and demodulation unit |
| 240 | Control signal and reference signal processing unit |
| 250 | Encoding/decoding unit |
| 260 | Data transmitting and receiving unit |
| 270 | Control unit |
| 1001 | Processor |
| 1002 | Memory |
| 1003 | Storage |
| 1004 | Communication device |
| 1005 | Input device |
| 1006 | Output device |
| 1007 | Bus |

**Claims**

1. A terminal comprising:

   a control unit that searches for a radio frequency based on at least one of a channel raster and a synchronization raster,
   wherein the control unit searches for the radio frequency based on at least one of the channel raster and the synchronization raster having a wider interval than when using a frequency band including one or a plurality of frequency ranges, in different frequency bands different from the frequency band.

2. A terminal comprising:

   a control unit that searches for a radio frequency based on at least one of a channel raster and a synchronization raster,
wherein the control unit determines that the synchronization raster is not configured in different frequency bands different from a frequency band including one or a plurality of frequency ranges.

3. The terminal according to claim 1, wherein the control unit determines a position of the synchronization raster to which system information is notified, based on a numerical value indicating an offset or a range of a synchronization channel number.

4. The terminal according to claim 1, wherein the control unit determines a position of the synchronization raster to which system information is notified, based on a numerical value indicating an offset or a range of a synchronization channel number notified using a part of a synchronization signal block or a reference signal.

# FIG. 1

## FIG. 2

FR1
{15, 30, 60} kHz SCS
5~100 MHz BW

FR3

FR2
{60, 120, (240)} kHz SCS
50~400 MHz BW

FR4
Above 52.6GHz

f

0.41
GHz

1 GHz

7.125
GHz

10 GHz

24.25
GHz

52.6
GHz

100 GHz

EP 4 021 097 A1

# FIG. 3

Radio Frame (10ms)

| #0 | #1 | #2 | #3 | #4 | #5 | #6 | #7 | #8 | #9 |

Sub frame (1ms)

→ t

SUBCARRIER SPACING

Slot (14-symbol)

15kHz

| #0 | #1 | #2 | #3 | #4 | #5 | #6 | #7 | #8 | #9 | #10 | #11 | #12 | #13 |

Slot (14-symbol)

30kHz

Slot (14-symbol)

60kHz

Slot (14-symbol)

120kHz

Slot (14-symbol)

240kHz

## FIG. 4

Channel Bandwidth         SS/PBCH block

Channel raster
(NR-ARFCN)

Synchronization raster
(GSCN)

f

EP 4 021 097 A1

# FIG. 5

EP 4 021 097 A1

# FIG. 6

```
maxNARFCN          INTEGER ::= 3279165 -- Maximum value of NR carrier frequency
maxNARFCN-r17      INTEGER ::= 3516665 -- Maximum value of NR carrier frequency
```

# FIG. 7

```
FrequencyInfoDL ::=              SEQUENCE {
    absoluteFrequencySSB            ARFCN-ValueNR                                           OPTIONAL,   -- Cond SpCellAdd
    frequencyBandList               MultiFrequencyBandListNR,
    absoluteFrequencyPointA         ARFCN-ValueNR,
    scs-SpecificCarrierList         SEQUENCE (SIZE (1..maxSCSs)) OF SCS-SpecificCarrier,
    [[
    absoluteFrequencySSB-r17            ARFCN-ValueNR-r17                                   OPTIONAL,   -- Need R
    absoluteFrequencyPointA-r17         ARFCN-ValueNR-r17                                   OPTIONAL,   -- Need R
    ]]
    ...
}

ARFCN-ValueNR-r17 ::=           INTEGER (0..maxNARFCN-r17)
```

EP 4 021 097 A1

# FIG. 8

```
maxNARFCN         INTEGER ::= 3279165 -- Maximum value of NR carrier frequency
maxNARFCN-r17     INTEGER ::= 3338540 -- Maximum value of NR carrier frequency
```

FIG. 9

## INTERNATIONAL SEARCH REPORT

| International application No. |
| --- |
| PCT/JP2019/032923 |

A.   CLASSIFICATION OF SUBJECT MATTER
H04W 56/00(2009.01)i; H04W 72/04(2009.01)i
FI: H04W72/04 132; H04W56/00 130

According to International Patent Classification (IPC) or to both national classification and IPC

B.   FIELDS SEARCHED

Minimum documentation searched (classification system followed by classification symbols)
H04W4/00-99/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X | 3rd Generation Partnership Project; Technical Specification Group Radio Access Network; NR; Base Station (BS) radio transmission and reception (Release 16), 3GPP TS 38.104 V16.0.0, 03 July 2019, section 5.4 | 1-2 |
| Y | section 5.4 | 3-4 |
| Y | 3rd Generation Partnership Project; Technical Specification Group Radio Access Network; NR; Physical layer procedures for control (Release 15), 3GPP TS 38.213 V15.6.0, 24 June 2019, section 13 | 3-4 |

☐   Further documents are listed in the continuation of Box C.   ☐   See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 20 February 2020 (20.02.2020) | 10 March 2020 (10.03.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Technical Specification Group Radio Access Network; Study on requirements for NR beyond 52.6 GHz. 3GPP TR 38.807 V0.1.0, 3rd Generation Partnership Project. 3GPP, March 2019, vol. 16
- Technical Specification Group Radio Access Network; NR; User Equipment (UE) radio transmission and reception. 3GPP TS 38.101-1 V15.6.0, 3rd Generation Partnership Project. 3GPP, June 2019, vol. 15

- Technical Specification Group Radio Access Network; NR; User Equipment (UE) radio transmission and reception. GPP TS 38.101-2 V15.6.0, 3rd Generation Partnership Project. 3GPP, June 2019, vol. 15